# EUROPÄISCHE PATENTSCHRIFT

(11) **EP 2 927 696 B1**
(45) Veröffentlichungstag und Bekanntmachung des Hinweises auf die Patenterteilung: **09.06.2021**
(21) Anmeldenummer: 15000888.6
(22) Anmeldetag: 26.03.2015
(51) Int. Cl.: G01N 35/10, C12Q 1/00, G01N 1/14, G01N 30/24

(54) **VORRICHTUNG ZUR AUTOMATISCHEN PROBENAUFNAHME**
DEVICES FOR AUTOMATICALLY COLLECTING SAMPLES
DISPOSITIF DE RÉCEPTION AUTOMATIQUE D'ÉCHANTILLON

(30) Priorität: 28.03.2014 DE 102014004578
(43) Veröffentlichungstag der Anmeldung: 07.10.2015
(73) Patentinhaber: Gerstel Systemtechnik GmbH & Co. KG, 45473 Mülheim (DE)
(72) Erfinder: Rose, Bernhard, 40627 Düsseldorf (DE)
(74) Vertreter: Sparing Röhl Henseler

(56) Entgegenhaltungen:
- WO-A1-97/29846
- WO-A1-2007/022667
- US-A1- 2002 131 903
- US-A1- 2007 231 217
- US-A1- 2011 042 317
- US-B1- 6 468 810

## Beschreibung

Die Erfindung betrifft eine Vorrichtung zur automatischen Probennahme von Proben zur Probenvorbereitung oder Probenaufgabe für ein Analysegerät nach dem Oberbegriff des Anspruchs 1.

Die Merkmale des Oberbegriffs 1 sind bekannt aus US 2002/131903 A1. Ein Autosampler zur Analyse von Partikeln in Luft- und/oder in Flüssigkeitsproben ist bekannt aus US 2007/0231217 A1, wobei dort eine Durchstecheinheit vorgesehen ist, die gefedert aufgebaut ist.

Analysegeräte dienen der qualitativen und quantitativen Bestimmung von Probeninhaltsstoffen, insbesondere unter Einsatz chromatographischer Trennmethoden. Die Effizienz der Trenntechniken lässt sich in der Regel durch eine geeignete Probenvorbereitung oder Probenaufgabe steigern. Zur Höchstleistung in Präzision, Wiederholbarkeit und Probendurchsatz gelangt der Anwender indes nur, wenn es ihm gelingt, unter anderem die Probennahme zu automatisieren. Für Chromatographen, insbesondere Gaschromatographen, sind daher automatische Probenvorbereitungs- und -injektionseinrichtungen, so genannte Autosampler, bekannt.

Aus DE 102 19 790 C1 ist ein solcher Autosampler bekannt, der einen in drei zueinander senkrechten Richtungen verfahrbaren Aufnahmearm für einen Halter eines Probenaufnehmers umfasst. Derartige Autosampler sind für einen vorbestimmten, einfachen Ablauf, etwa eine Probenaufnahme mittels einer Spritze aus einer Ampulle (Vial) und Aufgabe der Probe in ein Probenaufgabesystem eines Analysegerätes, und einen für diesen Ablauf vorgeschlagenen Typ von Probenaufnehmern, etwa Spritzen bestimmter Größe ausgelegt. Es ist deshalb auch bekannt, mehrere Aufnahmen zu einem Aufnahmearm vorzusehen.

Die verwendeten Spritzen erlauben jedoch nur eine Probennahme von Flüssigkeiten oder Gasen. Im Falle von Feststoffen sind zumindest die Analyseschritte der Einwaage von Proben und das Auflösen der Proben zusätzlich erforderlich. Nicht körnige Feststoffe sind zudem zu mahlen. Robotersysteme, die die von einem Laborchemiker normalerweise manuell ausgeführten Operationen übernehmen, benötigen deshalb mindestens vier Bewegungsfreiheitsgrade, um innerhalb eines Bewegungskreises möglichst alle Positionen erreichen zu können. Die Probennahme von Feststoffen ist folglich aufwändig und mit den bekannten Autosamplern nicht möglich.

Aufgabe der Erfindung ist es daher, eine Vorrichtung zur automatischen Probennahme zu schaffen, die die automatisierte Handhabung von Proben aus körnigen Feststoffen zur analytischen Untersuchung verbessert.

Diese Aufgabe wird durch die Merkmale des Anspruchs 1 gelöst.

Hierdurch wird eine Vorrichtung zur automatischen Probennahme geschaffen, die die Probennahme von körnigen Feststoffen in das System der Probennahme flüssiger und gasförmiger Proben integrierbar macht, so dass mit den bekannten Autosamplern, auch die Probennahme körniger Feststoffe automatisierbar ist. Die bei solchen Autosamplern zur Probenaufnahme verwendeten Spritzen weisen Spritzennadeln auf, die erfindungsgemäß als Kanülen mit integrierten Kanülenkolben ausgebildet sind. Probenaufnehmer mit solchen Kanülen sind in beweglichen Aufnahmearmen von Autosamplern handhabbar. Der erfindungsgemäß vorgesehene Druckbegrenzer ist ein Ergänzungsbaustein für Autosampler, ohne dass deren Funktionsaufbau eine Änderung erfährt.

Die erfindungsgemäßen Kanülen können über die Positionierung des Kanülenkolbens in der Kanüle Füllräume definieren, die bestimmte Dosiermengen aufnehmen, so dass der Aufwand für das Einwiegen reduziert werden kann. Körnige Feststoffe in Minimalmengen können erfindungsgemäß einfach eingewogen werden, insbesondere durch kontrolliertes Herunterfahren des Kanülenkolbens.

Für eine einfache Nachrüstung vorhandener Autosampler können die Tablets mit einer Anzahl Probengefäße Sockeleinsätze mit Federelementen aufweisen, die die Probengefäße abgefedert lagern. Eine Bewegung des Probengefäßes gegenüber dem Probenaufnehmer wird gesteuert, wodurch Andruckkräfte des unteren Endes der Kanüle am Boden des Probengefäßes während des Einbringens einer Probe in den Füllraum der Kanüle einstellbar und begrenzbar sind.

Die erfindungsgemäße Entnahme aus einem Probengefäß kann Anwendung finden beispielsweise bei der Probenvorbereitung zur Eingabe in ein mit einem Septum verschlossenes Vial oder zur Probenaufgabe in den Einspritzprozess.

Weitere Ausgestaltungen und Vorteile der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch in Draufsicht eine Vorrichtung zur automatischen Probenaufnahme von Proben gemäß einem ersten Ausführungsbeispiel,
Fig. 2 zeigt den Ausschnitt X von Fig. 1 in vergrößerter Darstellung,
Fig. 3 zeigt eine Vorderansicht des an einem beweglichen Aufnahmearm gehaltenen Probenaufnehmers mit einem Proben-Tray für Probengefäße gemäß Fig. 1,
Fig. 4 zeigt eine Vorderansicht des Probenaufnehmers gemäß Fig. 3,
Fig. 5 und Fig. 6 zeigen im Schnitt die Betätigung einer erfindungsgemäßen Kanüle für eine Probenaufnahme,
Fig. 7 zeigt den Ausschnitt W von Fig. 6 in vergrößerter Darstellung,
Fig. 8 bis Fig. 10 zeigen der Ausschnitt Z von Fig. 5 in vergrößerter Darstellung für eine Abfolge von Schritten zum Befüllen einer Kanüle bei einer Probennahme.
Fig. 11 zeigt im Schnitt eine Probenaufgabe in ein Vial mit dem Probenaufnehmer gemäß Fig. 5 und Fig. 6,
Fig. 12 zeigt den Ausschnitt Y gemäß Fig. 11 in vergrößerter Darstellung.

Die Erfindung betrifft eine Vorrichtung zur automatischen Probennahme von Proben zur Probenvorbereitung oder Probenaufgabe für ein Analysegerät, insbesondere einen Chromatographen wie einen Gaschromatographen oder Flüssigkeitschromatographen, ein Massenspektrometer oder dergleichen.

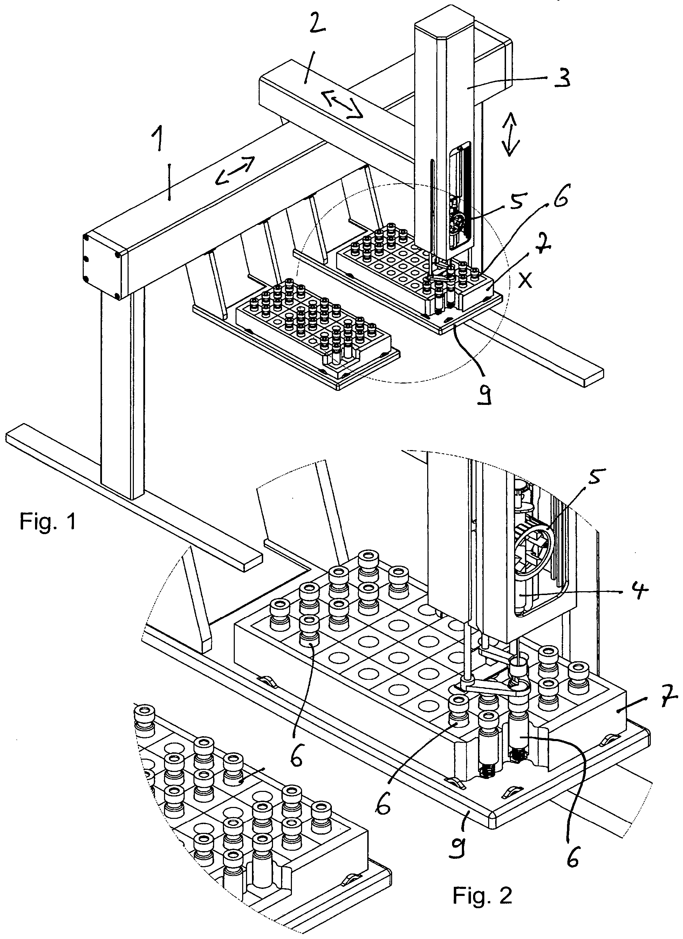

Fig. 1 und Fig. 2 zeigen eine solche Vorrichtung zur Probenhandhabung, einen Autosampler. Die Vorrichtung umfasst vorzugsweise eine horizontale Schlittenführung 1 für einen längs der Schlittenführung 1 verfahrbaren Kreuzschlitten 2, der außerdem vorzugsweise in der Ebene der Schlittenführung 1 senkrecht zur Schlittenführung 1 verfahrbar ist, damit alle Stationen angefahren werden können. Am Ende des Kreuzschlittens 2 befindet sich ein vorzugsweise vertikal verfahrbarer Aufnahmearm 3.

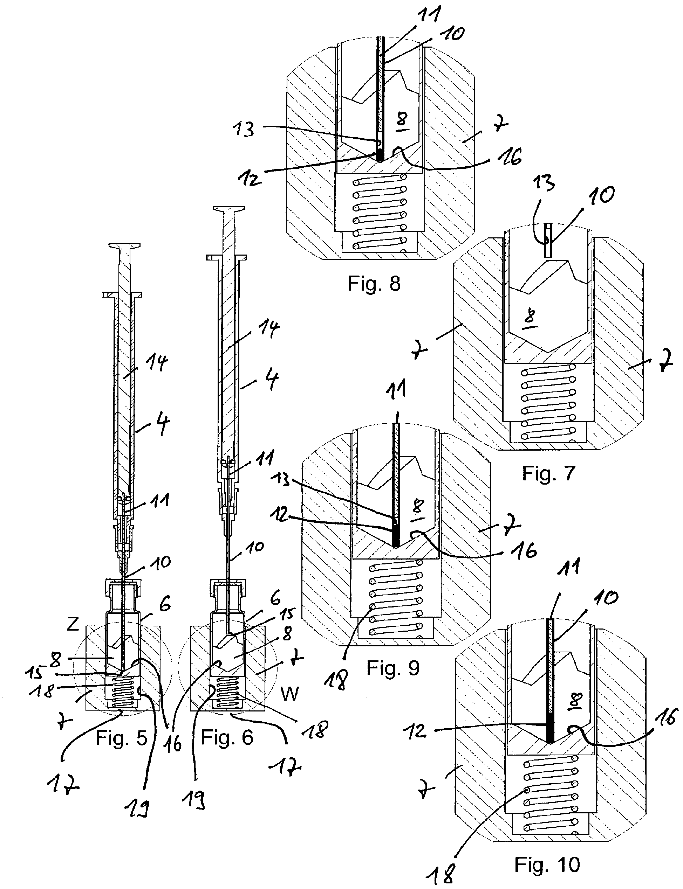

Der bewegliche Aufnahmearm 3 ist zur wechselbaren Aufnahme mindestens eines Probenaufnehmers 4 ausgelegt, wozu beispielsweise eine Halterung 5 dient, die an dem Aufnahmearm 3 vorgesehen ist. Der Aufnahmearm 3 dient dazu, den jeweiligen Probenaufnehmer 4 in eine Position über einem gewünschten Probengefäß 6 zu verfahren. Auf einem Probentray 7 sind dazu eine Anzahl Probengefäße 6 abgestellt. Die Probengefäße 6 enthalten jeweils eine Menge 8 (vgl. Fig. 5 bis Fig. 10) an einem körnigen Feststoff. Das Probentray 7 mit einer wählbaren Anzahl von Probengefäßen 6 ist auf einem zur Vorrichtung gehörenden Tableau 9 absetzbar. Das Probentray 7 kann an individuell ausführbare Probengefäße 6 angepasst werden. Die Halterung 5 kann in bekannter Weise ausgebildet sein, wie beispielsweise in DE 102 19 790 C1 besch rieben.

Aus den Probengefäßen 6 wird aus der dort jeweils enthaltenen Menge 8 mittels des Probenaufnehmers 4 eine Probe 12 entnommen, wozu der Probenaufnehmner 4 auf-und abfahrbar ist. Die Bewegung wird ausgeführt durch den beweglichen Aufnahmearm 3. Die bevorzugte Bewegungsrichtung ist ein vertikales Verfahren des Probenaufnehmers 4 zur Probenaufnahme.

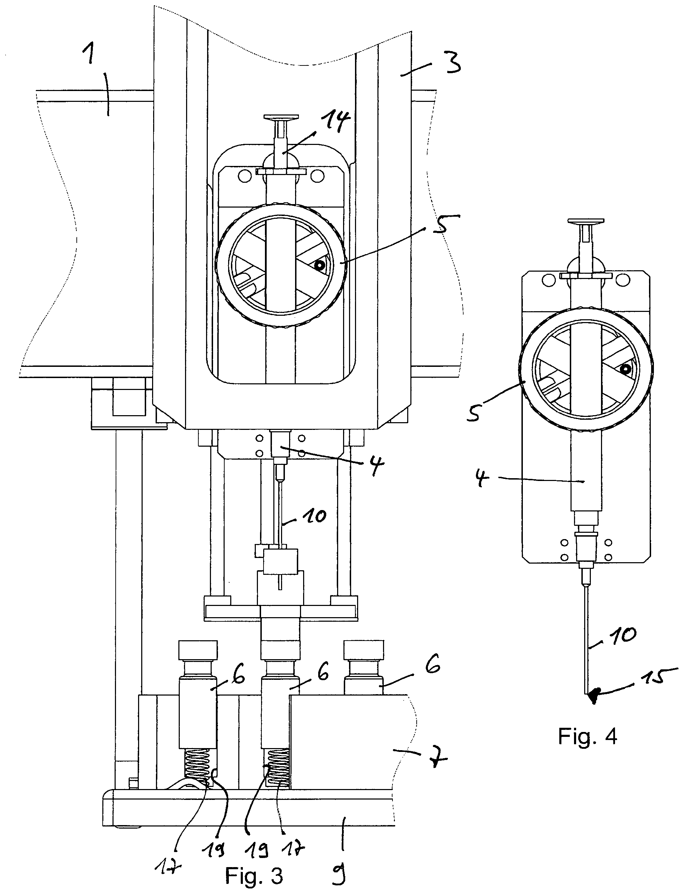

Wie Fig. 3 und Fig. 4 zeigen, weist der Probenaufnehmer 4 zur Probenaufnahme von körnigen Feststoffen eine Kanüle 10 als Füllraum auf. Wie ferner Fig. 5 bis Fig. 10 zeigen, ist in der Kanüle 10 ein Kanülenkolben 11 verschiebbar angeordnet zum Öffnen und Entleeren des mit einer Probe 12 befüllbaren Füllraums 13 der Kanüle 10 (vgl. Fig. 7 bis Fig. 10). Der Kanülenkolben 11 ist vorzugsweise an einen Schieber 14 angelenkt, mit dem der Kanülenkolben 11 in der Kanüle 10 verschoben werden kann. Der Schubweg erstreckt sich vorzugsweise zwischen einer unteren Position, bei der der Kanülenkolben 11 bis zum unteren Ende 15 der Kanüle 10 reicht (vgl. Fig. 4), und einer oberen Position, die bestimmt wird durch eine wählbare Höhe des Füllraumes 13, bis zu der der Kanülenkolben 11 vom unteren Ende 15 der Kanüle 10 zurückgezogen wird, um den Füllraum 13 für die Probenaufnahme bereitzustellen.

Die Kanüle 10 eines Probenaufnehmers 4 weist also ein unteres Ende 15 auf, das als ein freies Ende zum Einbringen von körnigem Feststoff in den Füllraum 13 der Kanüle 10 dient. Zum Einbringen von körnigem Feststoff in den Füllraum 13 ist vorgesehen, dass die Kanüle 10 mit dem unteren Ende 15 wiederholt gegen den Boden 16 des jeweiligen einen körnigen Feststoff enthaltenden Probengefäßes 6 verfahrbar ist. Das untere Ende 15 der Kanüle 10 schlägt dabei mit einem vorgebbaren Druck gegen den Boden 16 des jeweiligen Probengefäßes, der über einen an den Probenaufnehmer 4 oder das Probengefäß 6 angeschlossenen Druckbegrenzer 17 festlegbar ist. Bei Erreichen des vorgebbaren Drucks wird eine Abwärtsbewegung des Probenaufnehmers 4 von dem Druckbegrenzer 17 gesteuert beendet. Folglich ist ein Anpressdruck des unteren Endes 15 gegenüber dem Boden 16 auf den vorgebbaren Druck begrenzt. Der bewegliche Aufnahmearm 3 veranlasst den Probenaufnehmer 4 also dazu, dass die an diesem vorgesehene Kanüle 10 eine Bewegungsabfolge im Probengefäß 6 ausführt, die nach Art eines Stopfens erfolgt, bei dem körniger Feststoff in die Kanüle 10 bis zu einer wählbaren Füllhöhe hochgedrückt wird. Wird also die Kanüle 10 in das Probengefäß 6, das mit einem körnigen Feststoff, beispielsweise mit Pulver, insbesondere teilweise gefüllt ist, bis auf den Boden 16 hinein gedrückt, wird gleichzeitig auch der körnige Feststoff in die Kanüle 10 gedrückt.

Der Durchmesser der Kanüle 10 ist dabei derart gewählt, dass die Adhäsionskräfte der Körnung des Feststoffes untereinander und zur Kanüleninnenwand größer sind als die Schwerkräfte, so dass in die Kanüle 10 eingebrachte Feststoffe nicht ausfallen, sondern erst unter Anwendung der Schubkraft des Kanülenkolbens 11 ausgebbar sind. Übliche Kanüleninnendurchmesser liegen in einem Bereich von 0,4 bis 2,0 mm. Die Korngrößen des körnigen Feststoffs liegen durchschnittlich im Bereich von 10 - 500 µm.

Der Probenaufnehmer 4 ist vorzugsweise an einem vertikal verfahrbaren Aufnahmearm 3 zum Ausführen einer Anzahl Stoßanschläge des Endes 15 der Kanüle 10 gegen den Boden 16 des jeweiligen Probengefäßes 6 befestigt. Die Stoßrichtung koiinzidiert vorzugsweise mit der Achse einer Kanüle 10, die dann vertikal gerichtete Stoßanschläge als stopfende Bewegungen ausgeführt.

Der Druckbegrenzer 17 kann eine Kraftmesseinrichtung (nicht dargestellt) umfassen, die während des Einbringens von körnigem Feststoff in den Füllraum 13 der Kanüle 10 die auf das untere Ende 15 der Kanüle 10 ausgeübte Andruckkraft misst. Die Kraftmesseinrichtung kann als Kraftsensor in die Halterung 5 integriert sein.

Gemäß dem in den Fig. 1 bis 10 dargestellten Ausführungsbeispiel umfasst der an das jeweilige Probengefäß 6 angeschlossene Druckbegrenzer 17 ein Federelement 18. Das Federelement 18 federt das Probengefäß 6 in Bewegungsrichtung der Kanüle 10 ab und steuert eine Bewegung des Probengefäßes 6. Das Federelement 18 ist beispielsweise eine gewundene Drehungsfeder, deren Federachse bei der Probenaufnahme vorzugsweise mit der Achse der Kanüle 10 fluchtet. Das Federelement 18 kann für jedes Probengefäß 6 in einen Sockel 19 eingelegt sein, der im Probentray 7 ausgebildet ist, um die Federung der einzelnen Probengefäße 6 zu führen. Die federnde Lagerung der Probengefäße 6 gleicht auch Längentoleranzen aus und stellt sicher, dass die Kanüle 10 bis auf den Boden 16 aufkommen kann. Das Befüllen der Kanüle 10 bei einer Probenaufnahme aus einem Probengefäß 6 erfolgt vorzugsweise in einem eingefederten Bereich des Federelementes 18, wobei die Tiefe der Einfederung abhängt von der Federkonstante des verwendeten Federelementes 18. Die maximale Einfederung ist durch den Druckbegrenzer 17 bestimmt und über die Federkonstante einstellbar.

Der Boden 16 eines jeden Probengefäßes 6 ist vorzugsweise mit einer Eintiefung oder hohlkegelförmig ausgebildet, wodurch eine tiefliegende Sammelstelle für körnige Feststoffe in dem Probengefäß 6 entsteht. Die Entnahme geringer Mengen an Feststoff wird dadurch erleichtert. Das untere Ende 15 einer Kanüle kann mit einer Schneidkante ausgebildet sein, wodurch die Probenaufnahme mittels Kanüle 10 mit einem Zerkleinern von Körnern der körnigen Feststoffe kombinierbar ist.

Wie Fig. 7 bis Fig. 10 zeigen, wird zur Probenaufnahme die Kanüle 10 mehrfach gegen den Boden 16 des Probengefäßes 6 gefahren, hier dreimal. Wiederholt man den Vorgang mehrfach, so wird die Kanüle 10 immer höher gefüllt, da der körnige Feststoff sich in der Kanüle 10 verkrallt. Wie Fig. 10 zeigt, bestimmt der Kanülenkolben 11 durch seine Position in der Kanüle 10 die Eindringhöhe des körnigen Feststoffes. Die Probe 12 entspricht dann der Menge, die in den Füllraum 13 einbringbar ist. Durch den Kanülenkolben 11 wird sichergestellt, dass die Füllhöhe nicht eine bestimmte Höhe übersteigen kann. Wird die Reibung zwischen Feststoff und Innenwand der Kanüle 10 zu groß, wird das Herausbringen des angereicherten Feststoffes in der Kanüle 10 erschwert oder gegebenenfalls gar nicht mehr möglich. Die Füllhöhe ermöglicht auch, den entnommenen Stoff in der Kanüle 10 genau zu dosieren. Die Dosiereinheit in Form einer Kanüle 10 ist zudem ein Wegwerfartikel. Der Kanülenkolben 11 kann beispielsweise ein Draht sein.

Das einen körnigen Feststoff enthaltende Probengefäß 6 kann mit einem Septum verschlossen sein, da die Kanüle 10 ein solches Septum durchstechen kann. Dabei ist der Kanülenkolben 11 vorzugsweise unten und verschließt das untere Ende der Kanüle 10. Dadurch kann auch kein Septumstück beim Einstechen in die Kanüle gelangen. Nach dem Eindringen kann der Kanülenkolben 11 kontrolliert angehoben werden, um Platz für den Feststoff zu schaffen, in dem ein Füllraum 13 geschaffen wird. Durch hoch und runter bewegen der Kanüle wie vorstehend beschrieben wird die Probe 12 aus der Menge 8 des Feststoffes aufgenommen.

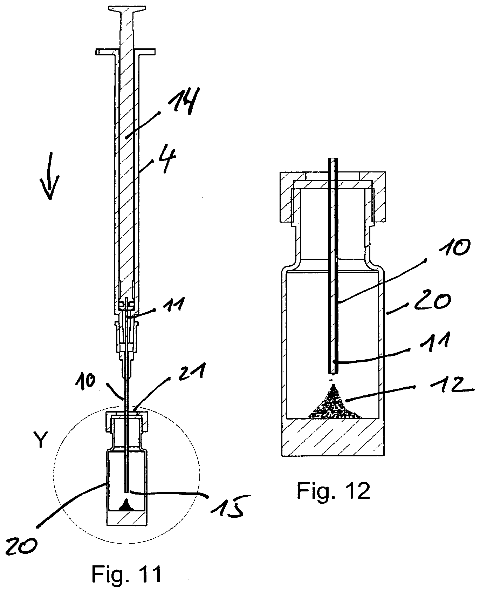

Wie Fig. 11 und Fig. 12 zeigen, kann die durch den Probenaufnehmer 4 und dessen Kanüle 10 aufgenommene Probe 12 in ein zu beprobendes Vial 20 abgegeben werden. Dies erfolgt durch ein Nach-unten-Drücken des Kanülenkolbens 11. Das Abgeben der Probe 12 kann mit einem Einwiegevorgang verknüpft sein, da die Betätigung des Kanülenkolbens 11 eine Mengensteuerung erlaubt. Die Kanüle 10 kann so ausgelegt sein, dass deren unteres Ende 15 ein Septum 21 durchstechen kann, mit dem das Vial 20 verschließbar ist. Die Kanüle 10 kann auch zur Aufgabe von Lösungsmitteln im Rahmen einer Probenvorbereitung benutzt werden.

Die Kanüle 10 kann ferner auf einem Spritzenkörper aufgesteckt sein, so dass dann der Kanülenkolben 11 an einen Schieber 14 in Form eines Spritzenkolbens anschließbar ist, wie dies insbesondere die Fig. 5, Fig. 6 und Fig. 11 verdeutlichen. In bekannte Autosampler, die Halterungen 5 zur Aufnahme von Spritzenkörpern aufweisen, können die erfindungsgemäßen Probenaufnehmer 4 ohne Umbaumaßnahmen eingebaut werden. Der Probenaufnehmer 4 ist dann wie eine Flüssigspritze montierbar. Ebenfalls verwendbar sind dann Spritzenwechsler. Vorhandene Automatisierungskomponenten können vollumfänglich genutzt werden.

Gemäß einem nicht dargestellten Ausführungsbeispiel kann das Probengefäß 6 mit einer Vibration oder Rüttelbewegung beaufschlagt werden, um den körnigen Feststoff mit vorzugsweise kleinen, schnellen Stößen zu bewegen. Hierdurch soll ein Rutschen des körnigen Feststoffs hin zum Boden des Probengefäßes 6 unterstützt werden.

## Patentansprüche

1. Vorrichtung zur automatischen Probennahme von Proben zur Probenvorbereitung oder Probenaufgabe für ein Analysegerät, insbesondere einen Chromatographen, mit einem beweglichen Aufnahmearm (3) zur wechselbaren Aufnahme mindestens eines Probenaufnehmers (4), und mit Probengefäßen (6), aus denen jeweils eine Probe (12) mittels eines auf- und abfahrbaren Probenaufnehmers (4) entnehmbar ist, zur Probennahme der Probenaufnehmer (4) eine Kanüle (10) als Füllraum (13) aufweist, in der ein Kanülenkolben (11) verschiebbar angeordnet ist zum Öffnen und Entleeren des mit einer Probe (12) befüllbaren Füllraums (13) der Kanüle (10), und die Kanüle (10) ein freies unteres Ende (15) aufweist, **dadurch gekennzeichnet, dass** zum Einbringen von körnigem Feststoff in den Füllraum (13) der Kanüle (10) ein Kontroller eines Autosamplers die Kanüle veranlasst, wiederholt gegen den Boden (16) des jeweiligen eine Menge (8) an körnigem Feststoff enthaltenden Probengefäßes (6) zu verfahren mit einem vorgebbaren Druck, der über einen an den Probenaufnehmer (4) oder das Probengefäß (6) angeschlossene Druckbegrenzer (17) festlegbar ist, wozu der durch den vom Autosampler bewegte Aufnahmearm (3) den Probenaufnehmer (4) dazu veranlasst, dass die an diesem vorgesehene Kanüle (10) eine Bewegungsabfolge im Probengefäß (6) ausführt, die nach Art eines Stopfens erfolgt.

2. Vorrichtung nach Anspruch 1, **dadurch gekennzeichnet, dass** der Probenaufnehmer (4) an einem vertikal verfahrbaren Aufnahmearm (3) befestigt ist.

3. Vorrichtung nach Anspruch 1 oder 2, **dadurch gekennzeichnet, dass** das untere Ende (15) der Kanüle (10) klopfend gegen den Boden (16) eines Probengefäßes (6) verfahrbar ist.

4. Vorrichtung nach einem der Ansprüche 1 bis 3, **dadurch gekennzeichnet, dass** der Druckbegrenzer (17) eine Kraftmesseinrichtung umfasst, die eine auf das untere Ende (15) der Kanüle (10) ausgeübte Andruckkraft misst, die zum Einbringen von körnigem Feststoff in den Füllraum (13) der Kanüle (10) ausübbar ist.

5. Vorrichtung nach einem der Ansprüche 1 bis 4, **dadurch gekennzeichnet, dass** der an das jeweilige Probengefäß (6) angeschlossene Druckbegrenzer (17) ein Federelement (18) umfasst, das das Probengefäß (6) in Bewegungsrichtung der Kanüle (10) abfedert und eine Bewegung des Probengefäßes (6) steuert.

6. Vorrichtung nach Anspruch 5, **dadurch gekennzeichnet, dass** das Federelement (18) eine gewundene Drehungsfeder ist, deren Federachse bei der Probennahme mit einer Achse der Kanüle (10) fluchtet.

7. Vorrichtung nach einem der Ansprüche 1 bis 6, **dadurch gekennzeichnet, dass** der Boden (16) des Probengefäßes (6) mit einer Eintiefung ausgebildet ist.

8. Vorrichtung nach einem der Ansprüche 1 bis 7, **dadurch gekennzeichnet, dass** auf das Probengefäß eine Vibration oder Rüttelbewegung ausübbar ist.

## Claims

1. Device for automatic sampling of samples for sample preparation or sample introduction for an analytical apparatus, in particular a chromatograph, with a movable holding arm (3) for exchangeably holding at least one sampler (4), and with sample containers (6), from each of which a sample (12) can be taken by means of a sampler (4) that can be moved up and down, wherein, for taking up a sample, the sampler (4) comprises a cannula (10) as a filling space (13), in which a cannula plunger (11) is displaceably arranged for opening and emptying the filling space (13) of the cannula (10) that is to be filled with a sample (12), and the cannula (10) comprises a free lower end (15), **characterized in that**, in order to introduce granular material into the filling space (13) of the cannula (10), a controller of an autosampler induces the cannula to push repeatedly against the bottom (16) of the respective sample container (6), containing a quantity (8) of granular material, using a predetermined pressure, which can be set by means of a pressure limiter (17) associated with the sampler (4) or with the sample container (6), for which purpose the movable holding arm (3) induces the sampler (4) to cause the cannula (10), which the sampler comprises, to carry out a sequence of movements in the sample container (6) in a plug-like manner.

2. Device according to Claim 1, **characterized in that** the sampler (14) is attached to a vertically displaceable holding arm (3).

3. Device according to Claim 1 or 2, **characterized in that** the lower end (15) of the cannula (10) is pulsatory pushed against the bottom (16) of a sample container (6).

4. Device according to one of Claims 1 to 3, **characterized in that** the pressure limiter (17) comprises a force meter, which measures a pressing force executed on the lower end (15) of the cannula (10), which force can be executed to introduce granular material into the filling space (13) of the cannula (10).

5. Device according to one of Claims 1 to 4, **characterized in that** the pressure limiter (17) associated with the respective sample container (6) comprises a spring element (18) for a spring-loaded support of the sample container (6) in the direction of movement of the cannula (10) and for controlling the movement of the sample container (6).

6. Device according to Claim 5, **characterized in that** the spring element (18) is a coil spring whose spring axis is aligned with an axis of the cannula (10) during the sampling procedure.

7. Device according to one of Claims 1 to 6, **characterized in that** the bottom (16) of the sample container (6) is provided with a recess.

8. Device according to one of Claims 1 to 7, **characterized in that** the sample container can be exposed to a vibration or shaking movement.

## Revendications

1. Dispositif d'échantillonnage automatique d'échantillons pour préparer des échantillons ou déposer des échantillons pour un appareil d'analyse, en particulier un chromatographe, avec un espace de réception (3) mobile pour recevoir de manière interchangeable au moins un échantillonneur (4), et avec des récipients d'échantillons (6), desquels respectivement un échantillon (12) peut être prélevé au moyen d'un échantillonneur (4) pouvant être soulevé et abaissé, dans lequel pour l'échantillonnage, l'échantillonneur (4) présente une canule (10) en tant qu'espace de remplissage (13), dans laquelle un piston de canule (11) est disposé de manière à pouvoir coulisser pour ouvrir et vider l'espace de remplissage (13), pouvant être rempli d'un échantillon (12), de la canule (10), et la canule (10) présente une extrémité inférieure (15) libre, **caractérisé en ce que** pour introduire des matières solides granulaires dans l'espace de remplissage (13) de la canule (10), un contrôleur d'un échantillonneur automatique amène la canule à déplacer de manière répétée contre le fond (16) du récipient d'échantillons (6) respectif contenant une quantité (8) en matières solides granulaires avec une pression pouvant être spécifiée, qui peut être fixée par l'intermédiaire d'un limiteur de pression (17) raccordé à l'échantillonneur (4) ou au récipient d'échantillons (6), le bras de réception (3) déplacé par l'échantillonneur automatique amenant à cet effet l'échantillonneur (4) à ce que la canule (10) prévue sur celui-ci exécute une séquence de déplacements dans le récipient d'échantillons (6), qui est effectuée à la manière d'une obstruction.

2. Dispositif selon la revendication 1, **caractérisé en ce que** l'échantillonneur (4) est fixé sur un bras de réception (3) pouvant être déplacé de manière verticale.

3. Dispositif selon la revendication 1 ou 2, **caractérisé en ce que** l'extrémité inférieure (15) de la canule (10) peut être déplacée en frappant contre le fond (16) d'un récipient d'échantillons (6).

4. Dispositif selon l'une quelconque des revendications 1 à 3, **caractérisé en ce que** le limiteur de pression (17) comprend un système de mesure de force, qui mesure une force de compression exercée sur l'extrémité inférieure (15) de la canule (10), qui peut être exercée pour introduire des matières solides granulaires dans l'espace de remplissage (13) de la canule (10).

5. Dispositif selon l'une quelconque des revendications 1 à 4, **caractérisé en ce que** le limiteur de pression (17) raccordé au récipient d'échantillons (6) respectif comprend un élément de ressort (18), qui amortit le récipient d'échantillons (6) dans le sens de déplacement de la canule (10) et commande un déplacement du récipient d'échantillons (6).

6. Dispositif selon la revendication 5, **caractérisé en ce que** l'élément de ressort (18) est un ressort de rotation enroulé, dont l'axe de ressort est en affleurement avec un axe de la canule (10) lors de l'échantillonnage.

7. Dispositif selon l'une quelconque des revendications 1 à 6, **caractérisé en ce que** le fond (16) du récipient d'échantillons (6) est réalisé avec un renfoncement.

8. Dispositif selon l'une quelconque des revendications 1 à 7, **caractérisé en ce qu'**une vibration ou un mouvement d'agitation peut être exercée ou exercé sur le récipient d'échantillons.
